# EUROPÄISCHE PATENTSCHRIFT

(11) **EP 0 569 382 B1**
(45) Veröffentlichungstag und Bekanntmachung des Hinweises auf die Patenterteilung: **28.09.1994**
(21) Anmeldenummer: 92901999.0
(22) Anmeldetag: 14.12.1991
(51) Int. Cl.: B24B 23/02, B25F 5/02, B27B 17/00, B24B 55/00

(54) **HANDWERKZEUGMASCHINE**
HAND TOOL
OUTILLAGE A MAIN

(30) Priorität: 29.01.1991 DE 4102483
(43) Veröffentlichungstag der Anmeldung: 18.11.1993
(73) Patentinhaber: ROBERT BOSCH GMBH, 70442 Stuttgart (DE)
(72) Erfinder: EICHER, Bernhard, D-7024 Filderstadt 4 (DE)
(86) Internationale Anmeldenummer: DE9100982
(87) Internationale Veröffentlichungsnummer: WO9212825

(56) Entgegenhaltungen:
- DE-A- 4 021 277
- US-A- 3 148 568

## Beschreibung

Die Erfindung geht aus von einer Handwerkzeugmaschine, insbesondere einer handgeführten Winkelschleifmaschine, der im Oberbegriff des Anspruchs 1 definierten Gattung.

Handwerkzeugmaschinen, insbesondere handgeführte Winkelschleifmaschinen, sind heute ausschließlich mit einem Ein- und Ausschalter für den elektrischen Antrieb ausgerüstet, der über die Schalterleiste betätigt wird. Die Schalterleiste liegt an der Handgriffunterseite und wird beim Umfassen des Handgriffes von mindestens einem Finger betätigt und während des Arbeitens mit der Maschine betätigt gehalten. Die ergonomische Gestaltung des Handgriffes, wie Querschnittsform und Neigungswinkel zur Geräteachse, ist für eine einzige Arbeitsstellung der Maschine optimiert.

Einige Handwerkzeugmaschinen werden in mehr als einer Arbeitsstellung für verschiedene Arbeitsgänge verwendet. Eine Winkelschleifmaschine z.B. wird neben dem Schleifen oder Schrubben auch für Trennarbeiten, z.B. zum Trennen von Steinplatten, verwendet. Die vorstehend angesprochene optimale Arbeitsstellung ist üblicherweise für die Arbeitsstellung Schrubben gegeben, in welcher die Schleifscheibe nach unten weist, also in etwa parallel zur Schalterleiste liegt. Bei Trennarbeiten hingegen wird die Winkelschleifmaschine um 90° um ihre Längsachse nach links oder rechts gedreht, so daß die Trennscheibe etwa senkrecht zum Werkstück steht. Durch diese Drehung kommt der Handgriff zusammen mit der Schalterleiste in eine ungünstige Lage zur umfassenden Hand. Wird die Maschine nach links gedreht und der Handgriff mit der rechten Hand umfaßt, kommt die Schalterleiste im Handballen zu liegen. Wird die Maschine nach rechts gedreht und mit der rechten Hand gehalten, kann die Schalterleiste nur noch mit dem Daumen betätigt und gehalten werden. In beiden Fällen ist ein sicheres und ermüdungsfreies Halten der Schalterleiste nicht möglich. Außerdem kann im Gefahrensfall im Hinblick auf die Lage von Einschaltsperre und Einschaltverriegelung nicht schnell genug reagiert und abgeschaltet werden.

Um diesen Nachteil zu umgehen, ist bereits bei einer Handwerkzeugmaschine der eingangs genannten Art der Gehäuseteil Handgriff oder der Gehäuseteil Getriebekopf am Motorgehäuse drehbar gehalten und kann in definierten Drehstellungen für eine jeweils ergonomisch günstige Arbeitshaltung mittels einer Fixiervorrichtung festgelegt werden.

Bei einer bereits vorgeschlagenen Handwerkzeugmaschine dieser Art (EP-A-0 539 382, nach Art. 54(3) EPÜ) wird die Drehbarkeit des Handgriffs bzw. des Getriebekopfs dadurch erreicht, daß das schalenförmige Gehäuse des drehbaren Gehäuseteils mit einem radial vorspringenden Bund versehen ist, der in eine Umlaufnut am Motorgehäuse eingreift. Die manuell betätigbare Fixiervorrichtung weist eine Verriegelungsvorrichtung zur Verriegelung des drehbaren Gehäuseteils am Motorgehäuse und eine Klemmvorrichtung zum Verspannen des drehbaren Gehäuseteils am Motorgehäuse auf. Die Verriegelungsvorrichtung weist dabei mindestens zwei im Motorgehäuse um einen Drehwinkel zueinander versetzt angeordnete Verriegelungsnuten und einen im Schalengehäuse des drehbaren Gehäuseteils schwenkbaren Verriegelungsnocken auf, der formschlüssig in jeweils eine der Verriegelungsnuten einzugreifen vermag. Die Klemmvorrichtung weist eine quer zu einem Längsschlitz im vorspringenden Bund des Schalengehäuses sich erstreckende Spannschraube auf, die mittels eines Spannhebels in einem Gewinde verschraubbar ist und die die beidseitig des Längsschlitzes ausgebildeten Gehäusebereiche des Schalengehäuses unter Reduzierung der Breite des Längsschlitzes aufeinanderzu zu bewegen vermag. Die zur Verriegelungsvorrichtung zusätzliche Klemmvorrichtung ist deshalb erforderlich, damit einerseits eine leichte Drehbeweglichkeit des drehbaren Gehäuseteils am Motorgehäuse sichergestellt ist und andererseits bei Arbeiten mit der Handwerkzeugmaschine in den unterschiedlichen Relativstellungen von Motorgehäuse und drehbarem Gehäuseteil immer eine steife Verbindung dieser Gehäuseteile gegeben ist.

### Vorteile der Erfindung

Die erfindungsgemäße Handwerkzeugmaschine mit den kennzeichnenden Merkmalen des Anspruchs 1 hat den Vorteil einer sehr einfachen konstruktiven Ausführung von Drehführung und Fixiervorrichtung des drehbaren Gehäuseteils in den verschiedenen Arbeitspositionen. Die Fixierung erfolgt dabei kraftschlüssig durch Spannen des Zugbandes, das auch zugleich die Drehführung des Gehäuses mitübernimmt. Die erfindungsgemäße Handwerkzeugmaschine hat den zusätzlichen Vorteil, daß der drehbare Gehäuseteil nicht nur in fest vorgegebenen Arbeitspositionen fixierbar ist, sondern daß auch individuelle Abweichungen um einige Winkelgrade möglich sind, die dem einen oder anderen Benutzer je nach individueller Gegebenheit eine ergonomisch optimalere Handhabung der Handwerkzeugmaschine ermöglichen. In dem vorgegebenen Drehwinkelbereich können Motorgehäuse und drehbarer Gehäuseteil in jeder Relativlage zueinander undrehbar festgelegt werden.

Die Abstützung der einen Gehäuseschale in der Ringnut im Lagerstutzen kann einmal gemäß einer ersten Ausführungsform der Erfindung über ein in der Ringnut einliegendes, mit der Gehäuseschale einstückiges Ringsegment erfolgen, wobei das Spannelement von einem an dem einen Ende des Zugbandes angreifenden Spannhebel gebildet ist, der mit einem Steilgewinde in einer Gewindebohrung in der Gehäuseschale verschraubbar ist.

Die Abstützung der Gehäuseschale in der Ringnut kann andererseits gemäß einer weiteren Ausführungsform der Erfindung durch ein bogenförmiges Andruckglied am Ende einer Spannschraube erfolgen, das in der Ringnut einliegt und von der Spannschraube in Radialrichtung beaufschlagt wird. Die Spannschraube ist dabei in einer Gewindebohrung in der einen Gehäuseschale in Radialrichtung verschraubbar.

### Zeichnung

Die Erfindung ist anhand von in der Zeichnung dargestellten Ausführungsbeispielen in der nachfolgenden Beschreibung näher erläutert. Es zeigen:
- Fig. 1: eine Seitenansicht einer handgeführten Winkelschleifmaschine,
- Fig. 2: einen Schnitt längs der Linie II-II in Fig. 1,
- Fig. 3: eine gleiche Darstellung wie in Fig. 2 einer Winkelschleifmaschine gemäß einem weiteren Ausführungsbeispiel.

### Beschreibung des Ausführungsbeispiels

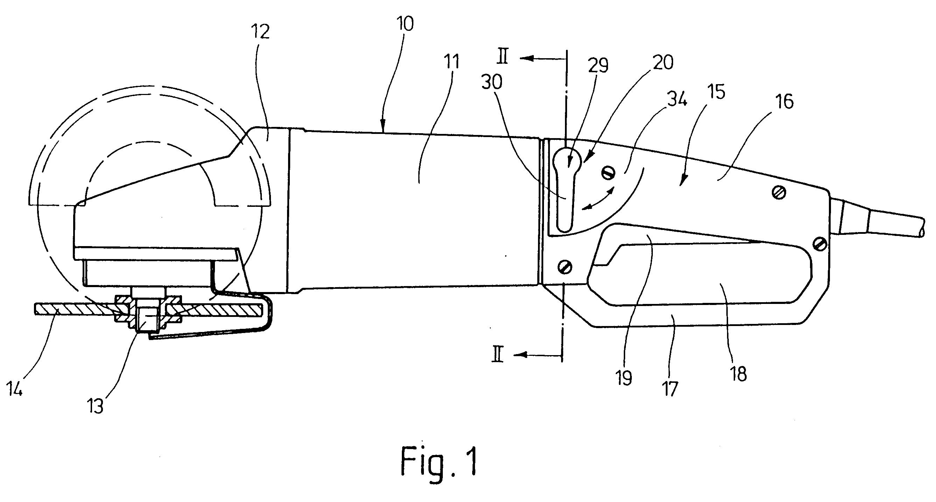

Die in Fig. 1 in Seitenansicht zu sehende handgeführte elektrische Winkelschleifmaschine als Ausführungsbeispiel für eine allgemeine elektrische Handwerkzeugmaschine weist ein Maschinengehäuse 10 auf, das in ein Motorgehäuse 11, in einen an der einen Gehäusestirnseite des Motorgehäuses 11 angeordneten Getriebekopf 12 mit vorstehender Antriebsspindel 13 für eine Schleifscheibe 14 und in einen an der anderen Gehäusestirnseite des Motorgehäuses 11 angeordneten Handgriff 15 unterteilt ist, der am Motorgehäuse 11 um dessen Längsachse über einen vorgegebenen Drehbereich drehbar ausgebildet ist. Der Handgriff 15 besteht aus einem Stielgriff 16, der beim Arbeiten mit der Winkelschleifmaschine von der Hand umschlossen wird, und aus einem daran einstückig angesetzten Bügel 17, der auf der Unterseite den Stielgriff 16 unter Belassung einer Durchgrifföffnung 18 überzieht und beim Arbeiten mit der Winkelschleifmaschine die um den Stielgriff 16 gelegten Finger nach unten schützend abdeckt. An der dem Bügel 17 zugekehrten Unterseite des Stielgriffs 16 ragt eine Schalterleiste 19 in die Durchgriffsöffnung 18 hinein, die einen Ein- und Ausschalter für einen elektrischen Antriebsmotor betätigt, der im Motorgehäuse 11 untergebracht ist. Der Getriebekopf 12 ist fest mit dem Motorgehäuse 11 verbunden, während der am Motorgehäuse 11 drehbare Handgriff 15 mittels einer Fixiervorrichtung 20 am Motorgehäuse 11 in drei unterschiedlichen Drehstellungen festgelegt werden kann. In der in Fig. 1 dargestellten Relativlage von Motorgehäuse 11 und Handgriff 15 zueinander wird die Winkelschleifmaschine zum sog. Schrubben verwendet. In dieser Relativlage liegt die Schleifscheibe 14 in etwa parallel zur Schalterleiste 19. Aus dieser Schrubbstellung kann durch Drehen des Handgriffes 15 bzw. des Motorgehäuses 11 um 90° nach links oder rechts die Winkelschleifmaschine für den Arbeitsgang "Trennen" vorbereitet werden. Bei dieser Arbeitstellung der Winkelschleifmaschine behält in Fig. 1 der Handgriff 15 seine Lage bei und das Motorgehäuse 11 samt Getriebekopf 12 ist um 90° verdreht, so daß die Schleifscheibe 14 die in Fig. 1 strichliniert eingezeichnete Lage einnimmt, bei welcher sie etwa rechtwinklig zur Schalterleiste 19 ausgerichtet ist.

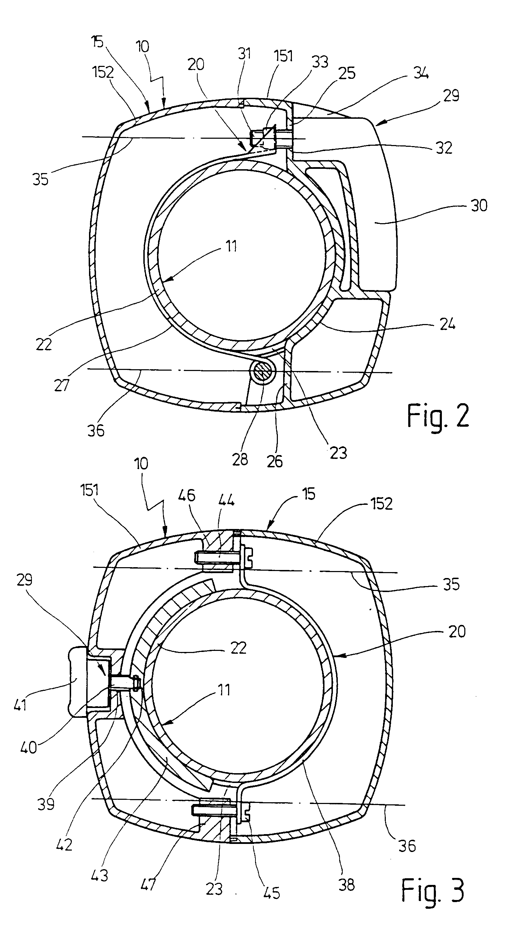

Einzelheiten der Fixiervorrichtung 20 sowie der drehbeweglichen Halterung des Handgriffs 15 am Motorgehäuse 11 sind in Fig. 2 dargestellt. An dem Motorgehäuse 11 ist ein hohlzylindrischer, zentraler Lagerstutzen 22 angeformt, der von den beiden Gehäuseschalen 151,152 des Handgriffs 15 übergriffen wird. Auf der Außenwand des Lagerstutzens 22 ist eine Ringnut 23 eingebracht, in welcher sich die eine Gehäuseschale 151 mit einem Ringsegment 24 abstützt, das sich über mehr als 90° Umfangswinkel der Ringnut 23 erstreckt und über Stege 25,26 einstückig mit der Gehäuseschale 151 verbunden ist. In dem dem Ringsegment 24 gegenüberliegenden Bereich der Ringnut 23 liegt ein Zugband 27 ein, das an zwei Punkten an der Gehäuseschale 151 befestigt ist. Das einen Teil der Fixiervorrichtung 20 bildende Zugband 27 wird von einem glattfächigen Stahlband gebildet, das mit seinem einen Ende an einem gehäusefesten Aufhängezapfen 28 drehbar befestigt ist und an seinem anderen Ende von einem gehäusefesten Spannelement 29 gegriffen ist. Das Spannelement 29 besteht aus einem Spannhebel 30 mit Gewindezapfen 31, der in einer gehäusefesten Gewindebohrung 32 im Steg 25 mit einem Steilgewinde verschraubbar ist. Auf dem Gewindezapfen 31 ist eine Mutter 33 aufgeschraubt ist, an welcher sich das Ende des Zugbandes 27 abstützt. Die Mutter 33 dient gleichzeitig zum Einstellen der auf das Zugband 27 bei Verschwenken des Spannhebels 30 aufgebrachten Zugkraft. Der um ca. 90° schwenkbare Spannhebel 30 liegt in einer außen in der Gehäuseschale 151 eingeformten Vertiefung 34 bündig ein, so daß er beim Hantieren mit der Handwerkzeugmaschine nicht störend über deren Gehäusekontur vorsteht. Die zweite Gehäuseschale 152 ist mittels Schrauben, von denen in Fig. 2 zwei durch strichpunktierte Linien 35,36 angedeutet sind, an der ersten Gehäuseschale 151 befestigt.

Zum Lösen der Fixiervorrichtung 20 ist der Spannhebel 30 in Pfeilrichtung in Fig. 1 nach oben zu schwenken. Dadurch schraubt sich dessen Gewindezapfen 31 in Fig. 2 nach links, und die Klemmkraft wird vom Zugband 27 genommen. Damit ist die Drehbarkeit des Handgriffs 15 auf dem Lagerstutzen 22 gegeben, und dieser kann, begrenzt durch hier nicht dargestellte Endanschläge, auf ± 90° gedreht werden. Danach wird der Spannhebel 30 in Pfeilrichtung in Fig. 1 wieder nach unten geschwenkt, wodurch sich der Gewindezapfen 31 des Spannhebels 30 wieder in Fig. 2 nach rechts schraubt und eine Zugkraft auf das Zugband 27 ausübt. Der Handgriff 15 wird damit durch das Zugband 27 am Lagerstutzen 22 des Motorgehäuses 11 undrehbar festgespannt. Es ist nicht erforderlich, den Handgriff 15 bis zu den Endanschlägen zu verdrehen. Eine davon abweichende Relativlage von Handgriff 15 und Motorgehäuse 11 kann eingestellt werden, wenn dies aus ergonomischen Gründen von Vorteil ist.

Bei der in Fig. 3 im Querschnitt dargestellten Ausführungsform einer Winkelschleifmaschine besteht die Fixiervorrichtung 20 wiederum aus einem Zugband 38, das in der Ringnut 23 im Lagerstutzen 22 einliegt und an seinen beiden Enden in der Gehäuseschale 151 befestigt ist, und aus dem Spannelement 29, das eine Zugkraft auf das Zugband 38 aufbringt. Das Spannelement 29 wird hier von einer in einer Gewindebohrung 39 in der Gehäuseschale 151 in Radialrichtung sich verschraubenden Spannschraube 40 gebildet, die mit einem außen an der Gehäuseschale 151 vorstehenden Handschraubgriff 41 verbunden ist. Endseitig greift die Spannschraube 40 in eine Sackbohrung 42 eines ringsegmentförmigen Andruckgliedes 43 hinein und stützt sich stirnseitig am Grunde der Sackbohrung 42 ab. Das ringsegmentförmige Andruckglied 43 liegt in der Ringnut 23, dem Zugband 27 gegenüberliegend, ein und erstreckt sich über mehr als 90° Umfangswinkel der Ringnut 23. Das Andruckglied 43 ist aus Kunststoff gefertigt und wird beim Spritzvorgang gleich an das Ende der Spannschraube angeformt. Durch Drehen des Handschraubgriffes 41 in die eine Richtung schraubt sich die Spannschraube 40 in Fig. 3 radial in Innere der Gehäuseschale 151 hinein und preßt dabei das Andruckglied 43 gegen den Lagerstutzen 22, wodurch auf das Zugband 38 eine Zugspannung aufgebracht wird. Das Zugband 38 ist an jedem Ende mittels einer Schraube 44 bzw. 45 an einem mit der Gehäuseschale 151 einstückigen Gehäusezapfen 46 bzw. 47 befestigt. Die zweite Gehäuseschale 152 ist wiederum durch Schrauben an der ersten Gehäuseschale 151 festgeschraubt. Zwei Schrauben sind durch strichpunktierte Linien 35,36 symbolisch markiert. Durch Lösen der Spannschraube 40 kann die Zugkraft von dem Zugband 38 genommen werden, so daß der Handgriff 15 in gleicher Weise wie in Fig. 2 beschrieben auf dem Lagerstutzen 22 gedreht werden kann. In der eingestellten Relativlage zwischen Handgriff 15 und Motorgehäuse 11 wird die Spannschraube 40 wieder angezogen und somit der Handgriff 15 über den Lagerstutzen 22 am Motorgehäuse 11 undrehbar verspannt.

Die als Stahlbänder ausgeführten Zugbänder 27 und 38 in Fig. 2 und 3 können durch ein Gliederband ersetzt werden. Dies hat den Vorteil, daß das Zugband besser am Lagerstutzen anliegt, im entspannten Zustand besser die Klemmkraft freigibt und dadurch eine gleichmäßigere Drehbewegung des Handgriffs 15 zuläßt.

## Patentansprüche

1. Handwerkzeugmaschine, insbesondere handgeführte Winkelschleifmaschine, mit einem Maschinengehäuse (10), das in ein einen elektrischen Antrieb aufnehmendes Motorgehäuse (11), in einen an der einen Stirnseite des Motorgehäuses (11) angeordneten Getriebekopf (12) mit vorstehender Antriebsspindel (13) für ein Werkzeug und in einen an der anderen Stirnseite des Motorgehäuses (11) angeordneten Handgriff (15) mit einer Schalterleiste (19) zum Ein- und Ausschalten des elektrischen Antriebs unterteilt ist, wobei entweder der Handgriff (15) oder der Getriebekopf (12) zweischalig als drehbarer Gehäuseteil relativ zum Motorgehäuse (11) um dessen Längsachse drehbar ausgebildet ist, und mit einer manuell betätigbaren Fixiervorrichtung (20) zum Festsetzen des drehbaren Gehäuseteils in unterschiedlichen Drehstellungen zum Motorgehäuse (11), wobei am Motorgehäuse (11) ein zentraler Lagerstutzen (22) angeformt ist, von dem zweischaligen drehbeweglichen Gehäuseteil (15) eine der Gehäuseschalen (151) sich in einer Ringnut (23) im Lagerstutzen (22) abstützt, die Fixiervorrichtung (20) ein in der Ringnut (23) einliegendes Zugband (27;38), das an der am Lagerstutzen (22) sich abstützenden Gehäuseschale (151) endseitig festgelegt ist und den Lagerstutzen (22) an der der Abstützstelle diametral gegenüberliegenden Seite über einen Teil seines Umfangs umspannt, und ein Spannelement (29) zum Aufbringen einer Zugkraft auf das Zugband (27;38) aufweist, und die andere Gehäuseschale (152) an der ersten Gehäuseschale (151) befestigt, vorzugsweise angeschraubt, ist.

2. Maschine nach Anspruch 1, dadurch gekennzeichnet, daß die eine Gehäuseschale (151) zur Abstützung an dem Lagerstutzen (22) ein in der Ringnut (23) einliegendes Ringsegment (24) aufweist, das vorzugsweise sich über mehr als 90° Umfangswinkel des Lagerstutzens (22) erstreckt, und daß das Spannelement (29) von einem an dem einen Ende des Zugbandes (27) angreifenden Spannhebel (30) mit Gewindezapfen (31) gebildet ist, der mit einem Steilgewinde in einer Gewindebohrung (31) in der Gehäuseschale (151) verschraubbar ist.

3. Maschine nach Anspruch 2, dadurch gekennzeichnet, daß die Gehäuseschale (151) eine außen eingeformte Vertiefung (34) aufweist, in welcher der Spannhebel (30) mit der Umrißkontur der Gehäuseschale (151) bündig einliegt.

4. Maschine nach Anspruch 1, dadurch gekennzeichnet, daß das Spannelement (29) sich aus einer in einer Gewindebohrung (39) in der einen Gehäuseschale (151) in Radialrichtung sich verschraubenden Spannschraube (40) und einem die Abstützstelle der einen Gehäuseschale (151) am Lagerstutzen (22) bildenden ringsegmentförmigen Andruckglied (43) zusammensetzt, das in der Ringnut (23) des Lagerstutzens (22) einliegt und von der Spannschraube (40) in Radialrichtung kraftbeaufschlagt wird.

5. Maschine nach Anspruch 4, dadurch gekennzeichnet, daß sich das Andruckglied(43) über mehr als 90° Umfangswinkel des Lagerstutzens (22) erstreckt und daß die Spannschraube (40) etwa mittig am Andruckglied (43) angreift.

6. Maschine nach Anspruch 5, dadurch gekennzeichnet, daß das Andruckglied (43) eine Sackbohrung (42) aufweist, in welche das Spannschraubenende hineinragt und sich stirnseitig an dem Sackgrund abstützt.

7. Maschine nach Anspruch 6, dadurch gekennzeichnet, daß das Andruckglied (43) aus Kunststoff gefertigt und an das Ende der Spannschraube (40) angespritzt ist.

8. Maschine nach einem der Ansprüche 1 - 7, dadurch gekennzeichnet, daß das Zugband (27,38) als glattflächiges Stahlband ausgebildet ist.

9. Maschine nach einem der Ansprüche 1 - 7, dadurch gekennzeichnet, daß das Zugband (27,38) als Gliederband ausgebildet ist.

10. Maschine nach einem der Ansprüche 1 - 9, dadurch gekennzeichnet, daß der zweischalige drehbare Gehäuseteil der Handgriff (15) ist.

## Claims

1. Hand machine tool, particularly a hand-guided angle grinding machine, having a machine casing (10) which is subdivided into a motor casing (11) holding an electric drive, into a gear head (12) arranged on the one end face of the motor casing (11) and having a projecting drive spindle (13) for a tool, and into a handle (15) arranged on the other end face of the motor casing (11) and having a switch bar (19) for switching the electric drive on and off, either the handle (15) or the gear head (12) being formed by two shells as a rotatable casing part rotatable relative to the motor casing (11) about the longitudinal axis of the latter, and having a manually operable fastening device (20) for securing the rotatable casing part in different rotational positions relative to the motor casing (11), wherein on the motor casing (11) a central bearing tube (22) is formed, one of the casing shells (151) of the rotatable two-shell casing part (15) is supported in an annular groove (23) in the bearing tube (22), the fastening device (20) has a tension band (27, 38) which lies in the annular groove (23) and which is fastened at its end to the casing shell (151) supported on the bearing tube (22) and extends around a part of the circumference of the bearing tube (22) on the side diametrically opposite the support point, and a tensioning element (29) for applying a tensile force to the tension band (27, 38), and the other casing shell (152) is fastened, preferably screwed, to the first casing shell (151).

2. Machine according to Claim 1, characterized in that for the purpose of support on the bearing tube (22) the one casing shell (151) has a ring segment (24) which lies in the annular groove (23) and preferably extends over an angle of more than 90° on the circumference of the bearing tube (22), and in that the tensioning element (29) is formed by a tensioning lever (30) which acts on the one end of the tension band (27) and has a threaded pin (31) which can be screwed by means of a coarse-pitch thread into a threaded bore (31) in the casing shell (151).

3. Machine according to Claim 2, characterized in that the casing shell (151) has a depression (34) which is formed in its exterior and in which the tensioning lever (30) lies flush with the peripheral contour of the casing shell (151).

4. Machine according to Claim 1, characterized in that the tensioning element (29) is composed of a tensioning screw (40) screwing in the radial direction into a threaded bore (39) in the one casing shell (151), and of a pressure element (43) which is in the form of a ring segment and forms the point of support of the one casing shell (151) on the bearing tube (22) and which lies in the annular groove (23) in the bearing tube (22) and is loaded with a force in the radial direction by the tensioning screw (40).

5. Machine according to Claim 4, characterized in that the pressure element (43) extends over an angle of more than 90° on the circumference of the bearing tube (22), and in that the tensioning screw (40) acts approximately centrally on the pressure element (43).

6. Machine according to Claim 5, characterized in that the pressure element (43) has a blind bore (42) into which the end of the tensioning screw projects, the latter being supported at its end face on the bottom of the blind bore.

7. Machine according to Claim 6, characterized in that the pressure element (43) is made of plastics material and is integrally moulded onto the end of the tensioning screw (40).

8. Machine according to one of Claims 1 to 7, characterized in that the tension band (27, 38) is in the form of a smooth-surfaced steel band.

9. Machine according to one of Claims 1 to 7, characterized in that the tension band (27, 38) is in the form of a link band.

10. Machine according to one of Claims 1 to 9, characterized in that the rotatable two-shell casing part is the handle (15).

## Revendications

1. Machine-outil à main, en particulier meuleuse d'angle guidée à la main, avec un boîtier de machine (10), qui est subdivisé en un boîtier de moteur (11) recevant un organe électrique d'entraînement, en une tête de transmission (12) disposée sur l'une des faces frontales du boîtier du moteur (11) avec une broche d'entraînement saillante (13) pour un outil et en une poignée (15) disposée sur l'autre face frontale du boîtier du moteur (11) avec une barrette de commutation (19) servant à mettre en marche et d'arrêter l'entraînement électrique, tandis que soit la poignée (15), soit la tête de transmission (12) est constituée par deux coquilles de façon à pouvoir tourner en tant que partie du boîtier pouvant tourner par rapport au boîtier de moteur (11) autour de son axe longitudinal et avec un dispositif de fixation (20) pouvant être actionné manuellement servant à bloquer la partie de boîtier qui peut tourner dans différentes positions de rotation par rapport au boîtier du moteur (11), un support central (22) étant formé sur le boîtier du moteur (11), l'une des coquilles de boîtier (151), faisant partie de la pièce de boîtier (15) rotative à deux coquilles, s'appuyant dans une rainure annulaire (23) dans le support (22), le dispositif de fixation (20) présente une bande de traction (27 ; 38), se trouvant dans la rainure annulaire (23), qui est fixée à ses extrémités sur la coquille de boîtier (151) s'appuyant sur le support (22) et qui serre sur une partie de son pourtour le support (22) sur le côté diamétralement opposé au point d'appui ainsi qu'un élément de serrage (29) servant à appliquer un effort de traction sur la bande de traction (27 ; 38) et l'autre coquille de boîtier (152) est fixée, de préférence vissée, sur la première coquille de boîtier (151).

2. Machine selon la revendication 1, caractérisée en ce que l'une des coquilles de boîtier (151) présente pour s'appuyer sur le support (22) un segment annulaire (24) se trouvant dans la rainure annulaire (23), qui de préférence s'étend sur un angle de plus de 90° du support (22) et en ce que l'élément de serrage (29) est formé par un levier de serrage (30), avec un téton fileté (31), venant en prise sur l'une des extrémités de la bande de traction (27), téton qui peut être vissé avec un filetage vissé dans un alésage (31) dans la coquille de boîtier (151).

3. Machine selon la revendication 2, caractérisée en ce que la coquille de boîtier (151) présente un renfoncement (34) formé à l'extérieur, dans lequel le levier de serrage (30) est placé de façon à venir à fleur du contour de la coquille du boîtier (151).

4. Machine selon la revendication 1, caractérisée en ce que l'élément de serrage (29) se compose d'une vis de serrage (40) se vissant dans un alésage fileté (39) dans l'une des coquilles de boîtier (151) dans le sens radial et d'un organe de pressage (43) en forme de segment annulaire formant le point d'appui de l'une des coquilles de boîtier (151) sur le support (22), organe de pressage (43), qui se trouve dans la rainure annulaire (23) du support (22) et est sollicité par la force par la vis de serrage (40) dans le sens radial.

5. Machine selon la revendication 4, caractérisée en ce que l'organe de pressage (43) s'étend sur un angle de plus de 90° du support (22) et en ce que la vis de serrage (40) vient en prise à peu près au milieu sur l'organe de pressage (43).

6. Machine selon la revendication 5, caractérisée en ce que l'organe de pressage (43) présente un trou borgne (42), dans lequel pénètre l'extrémité de la vis de serrage qui s'appuie du côté frontal sur le fond du trou borgne.

7. Machine selon la revendication 6, caractérisée en ce que l'organe de pressage (43) est fabriqué en matière plastique et est injecté sur l'extrémité de la vis de serrage (40).

8. Machine selon l'une des revendications 1 à 7, caractérisée en ce que la bande de traction (27, 38) est constituée sous la forme d'une bande d'acier à surface lisse.

9. Machine selon l'une des revendications 1 à 7, caractérisée en ce que la bande d'acier (27, 38) est constituée sous la forme d'une bande à maillons.

10. Machine selon l'une des revendications 1 à 9, caractérisée en ce que la partie du boîtier, en forme de deux coquilles, susceptible de tourner est la poignée (15).
